# FASCICULE DE BREVET EUROPEEN

(11) **EP 1 375 971 B1**
(45) Date de publication et mention de la délivrance du brevet: **27.07.2005**
(21) Numéro de dépôt: 03291566.2
(22) Date de dépôt: 25.06.2003
(51) Int. Cl.: F16H 57/04

(54) **Enceinte de boîte de vitesses et boîte de vitesses pilotée équipée d'une telle enceinte**
Ferngesteuertes Getriebe und ein dafür angepasstes Gehäuse
Pilot-controlled transmission and adapted casing therefor

(30) Priorité: 28.06.2002 FR 0208083
(43) Date de publication de la demande: 02.01.2004
(73) Titulaire: Peugeot Citroen Automobiles, 78140 Velizy-Villacoublay (FR)
(72) Inventeur: Lacöte, Bertrand, 94100 Saint Maur des Fossés (FR); Tanche, Christelle, 92250 La Garenne Colombes (FR); Planger, Cyrille, 93800 Epinay sur Seine (FR)
(74) Mandataire: Seytre, Françoise

(56) Documents cités:
- FR-A- 2 740 853
- GB-A- 2 041 117
- US-A- 3 529 698
- US-A- 4 644 815
- US-A1- 2001 008 194
- PATENT ABSTRACTS OF JAPAN vol. 1999, no. 13, 30 novembre 1999 (1999-11-30) & JP 11 218213 A (HONDA MOTOR CO LTD), 10 août 1999 (1999-08-10)

## Description

La présente invention concerne une enceinte de boite de vitesses comprenant un carter, au moins une ouverture pratiquée dans le fond du carter adaptée pour recevoir l'extrémité d'une ligne d'arbre creux de ladite boite, une première cuvette adaptée pour recevoir et contenir de l'huile contenue à l'intérieur de la boite de vitesses en fonctionnement, et un couvercle fixé au fond du carter à l'extérieur de celui-ci. Une telle enceinte de boite de vitesses est décrite dans US-A-4 644 815 qui est considéré comme l'état de la technique le plus proche.

Elle a plus particulièrement pour application les boites de vitesse pilotées, c'est-à-dire celles dont la commande interne des éléments mécaniques, tels que synchroniseurs, engrenages du type pignon qui la constituent, ne se fait pas uniquement par le biais de pièces mécaniques mais électriquement et/ou hydrauliquement.

La lubrification des éléments mécaniques qui constituent une boite de vitesses mécanique est généralement assurée par les projections d'huiles générées par les barbotages des engrenages de la boite en fonctionnement. Ces projections vont généralement sur les parois internes des carters de boite de vitesses pour redescendre vers le bas de ceux-ci. Généralement, une goulotte logée dans des nervures pratiquées sur une paroi latérale interne d'un carter est utilisée pour capter cette huile et l'acheminer vers la face avant de la boite de vitesses puis vers l'intérieur des arbres.

Dans le cas d'une boite de vitesses mécanique pilotée, l'ouverture pratiquée dans le carter pour recevoir l'actionneur de commande de la boite de vitesses oblige à réduire considérablement la longueur de la goulotte. La quantité d'huile qui arrive dans la goulotte n'est plus suffisante et il existe donc un risque de ne plus assurer de lubrification correcte des éléments mécaniques de la boite de vitesses.

De plus, l'architecture d'une boite de vitesses mécanique pilotée peut être telle que la mécanique interne est encadrée par des roulements. Il y alors un risque de déjaugeage lorsque le véhicule automobile qui est équipé d'une telle boite effectue un virage. L'huile présente dans la boite de vitesses subit une accélération qui la chasse vers le moteur. La partie arrière de la boite de vitesses n'est alors plus alimentée en huile. Par "partie arrière" de la boîte de vitesses on entend le fond du carter et le bas de la boîte de vitesses du côté roue gauche, c'est-à-dire celui opposé au moteur.

En outre, l'architecture d'une boite de vitesses mécanique pilotée peut être telle qu'elle ne permet pas de loger la goulotte au montage.

Le but de l'invention est alors de résoudre tout ou partie des problèmes précités.

Pour ce faire, l'invention a pour objet une enceinte de boite de vitesses comprenant un carter, au moins une ouverture pratiquée dans le fond du carter adaptée pour recevoir l'extrémité d'une ligne d'arbre creux de ladite boite, une première cuvette adaptée pour recevoir et contenir de l'huile contenue à l'intérieur de la boite de vitesses en fonctionnement, et un couvercle fixé au fond du carter à l'extérieur de celui-ci caractérisée en ce que la première cuvette est fixée à l'intérieur du carter et est en contact avec le fond du carter, en ce que l'enceinte comprend une seconde cuvette également adaptée pour recevoir et contenir de l'huile contenue à l'intérieur de la boite de vitesses en fonctionnement et fixée à l'intérieur du carter en étant en contact avec le fond du carter et en ce que lesdites première et seconde cuvettes sont positionnées au-dessus de la ligne d'arbre creux de la boite de vitesses en fonctionnement et débouchent à l'extérieur du fond du carter sur une pièce d'amenée d'huile comprenant une goulotte débouchant sur une tubulure adaptée pour être logée dans la ligne d'arbre creux.

Avec une telle enceinte, la lubrification de toute la mécanique interne est correctement assurée lors du fonctionnement de la boite de vitesses car l'arrivée d'huile en bout d'arbre de boite est assurée quelles que soient les conditions de fonctionnement de la boite de vitesses et, en particulier, lorsqu'un véhicule automobile qui en est équipé effectue un virage.

De préférence, lesdites première et seconde cuvettes sont disposées symétriquement par rapport à la ligne d'arbre creux.

Selon un mode de réalisation avantageux, la première cuvette présente une paroi inclinée d'un angle α sensiblement de l'ordre de 5° par rapport à la perpendiculaire du fond de ladite cuvette. L'alimentation en huile est ainsi correctement assurée en fonctionnement normal de la boite de vitesses. Un fonctionnement normal de la boite de vitesses est par exemple lorsqu'un véhicule qui en est équipé effectue un roulage à vitesse stabilisée sur une route sensiblement horizontale.

Selon un mode de réalisation également avantageux, la deuxième cuvette présente une paroi inclinée d'un angle α' compris entre 10 et 15° par rapport à la perpendiculaire du fond de ladite cuvette. L'alimentation en huile de la première cuvette est ainsi complétée en fonctionnement normal et l'alimentation en huile de la mécanique interne est assurée efficacement lors des déjaugeages.

Selon une autre caractéristique avantageuse, la pièce d'amenée d'huile est, dans un premier mode de réalisation, préalablement fixée au couvercle, de préférence par soudage, dans un second mode de réalisation, indépendante du couvercle et comprend, sur l'arrête destinée à coopérer avec la face intérieure du couvercle, un élément d'étanchéité apte à réduire les fuites d'huile entre le couvercle et la pièce d'amenée d'huile.

Avantageusement, le carter comprend des bossages adaptés pour se loger dans des lumières pratiquées dans chacune des cuvettes.

Avantageusement encore, la fixation des cuvettes est réalisée par clippage directement à la pièce d'amenée d'huile. Ces caractéristiques avantageuses conduisent lors de l'assemblage de la boite de vitesses à ne pas avoir à assurer le maintien des cuvettes lors de l'opération de coiffage de l'enceinte sur la mécanique interne elle-même déjà préalablement montée dans l'autre carter de la boite de vitesses en regard de l'embrayage. La mise en position des cuvettes est ainsi découplée de l'assemblage final de la boite. L'opération est réalisée par un montage préalable.

Selon une autre variante encore, le fond du carter présente deux autres ouvertures adaptées pour recevoir chacune l'extrémité d'une ligne d'arbre.

Selon une autre variante encore, une paroi latérale du carter présente une ouverture adaptée pour recevoir un actionneur de la boite de vitesses.

L'invention concerne également une boite de vitesses mécanique pilotée comprenant une enceinte décrite précédemment et au moins un actionneur.

Avantageusement, la ligne d'arbre creux recevant la tubulure de la pièce d'amenée d'huile est la ligne d'arbre primaire.

D'autres détails et caractéristiques avantageuses apparaîtront ci-après à la lecture de la description détaillée d'un exemple de réalisation de l'invention faite en référence aux figures suivantes dans lesquelles :

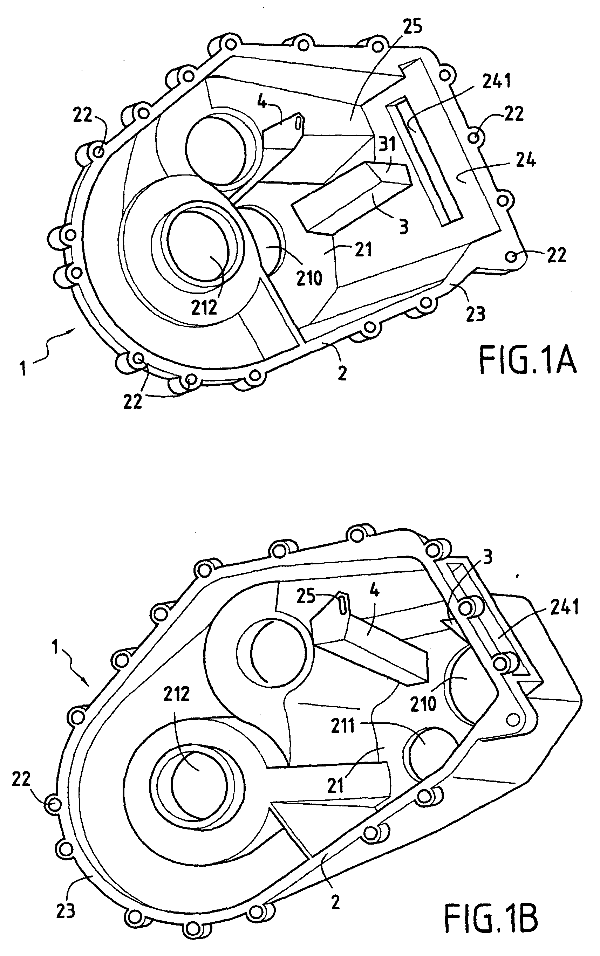

- les figures 1a et 1b sont des vues en perspective du carter de boite faisant partie de l'enceinte selon l'invention;
- la figure 2 est une vue de derrière du couvercle faisant partie de l'enceinte selon l'invention;
- la figure 3 est une vue en perspective du montage des cuvettes et de la pièce d'amenée d'huile selon l'invention.

Par souci de clarté, l'enceinte selon l'invention 1 est représentée ci-après avant son montage sur la mécanique interne de la boite de vitesses, c'est à dire les arbres, la pignonerie, les synchroniseurs..., qui elle-même est déjà montée et implantée dans l'autre carter de boite de vitesse qui vient fermer la boite de vitesses avec l'enceinte selon l'invention.

L'enceinte selon l'invention comprend tout d'abord un carter de boite 2 en aluminium dont le fond 21 présente trois ouvertures circulaires 210,211,212 chacune adaptée pour recevoir l'extrémité d'une ligne d'arbre de boite de vitesses. Ce carter présente de manière usuelle une pluralité de trous 22 rapportés sur le bord ouvert 23 adaptés pour recevoir des vis de fixation non représentés de l'enceinte avec l'autre carter lors de l'assemblage final de la boite de vitesses. La paroi latérale 24 de ce carter présente en outre une ouverture rectangulaire 241 adaptée pour recevoir un actionneur non représenté ici qui permet la commande des synchroniseurs et donc le pilotage de la boite.

A l'intérieur de ce carter 2 sont fixées deux cuvettes 3,4 de forme allongée, sensiblement de même longueur et en étant en contact avec le fond 21 du carter 2. La première cuvette 3 est implantée de telle sorte que sa face latérale 31 opposée à celle en contact avec le fond du carter est positionnée au bord de l'ouverture 241 qui reçoit l'actionneur de pilotage de boite. Chacune de ces première 3 et deuxième 4 cuvettes présente respectivement une ouverture oblongue 32, 42 qui vient se positionner autour d'un bossage 25 ménagé à l'intérieur du carter.

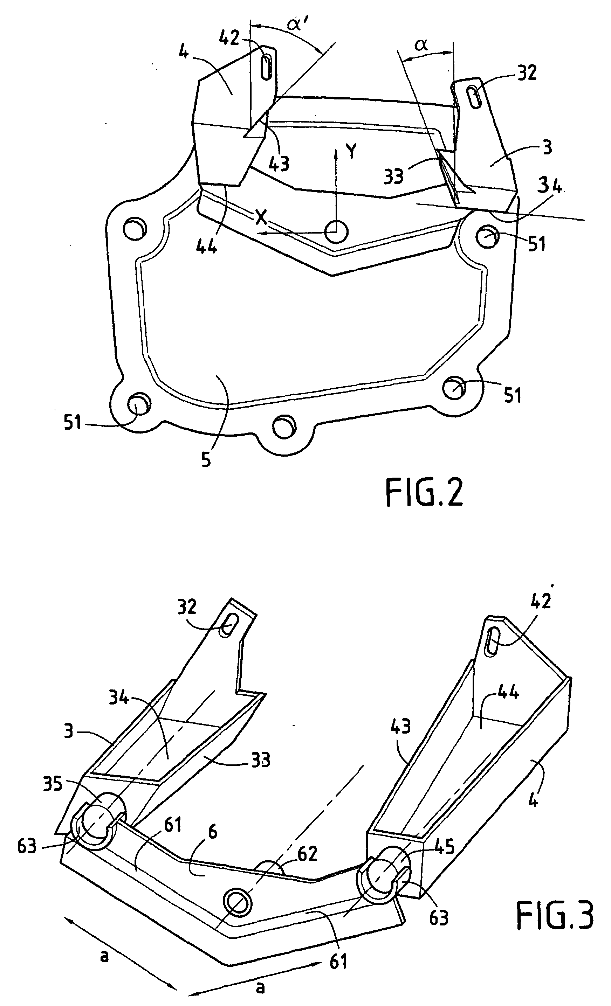

La première cuvette 3 présente une paroi latérale 33 inclinée d'un angle α de l'ordre de 5° par rapport au fond 34 de la cuvette qui, lorsque la boite de vitesses est en fonctionnement normal, est horizontal (selon l'axe X sur la figure 2). Cette inclinaison permet d'assurer une alimentation en huile à coup sûr lorsque la boite de vitesses est en fonctionnement normal.

La deuxième cuvette 4 présente une paroi latérale 43 inclinée d'un angle α' de l'ordre de 10° par rapport au fond 44 de la cuvette qui, lorsque la boite de vitesses est en fonctionnement normal, est horizontal (selon l'axe X sur la figure 2). Cette inclinaison permet de compléter l'alimentation en huile de la première cuvette 3, lorsque la boite de vitesses est en fonctionnement normal, et également d'assurer l'alimentation en huile lors des déjaugeages qui ont lieu par exemple lorsque le véhicule qui en est équipé effectue un virage.

L'enceinte comprend en outre un couvercle 5 en tôle fixé au carter 2, par l'intermédiaire de vis de fixation non représentés logés dans les trous de fixation 51 ménagés à la périphérie du couvercle.

Selon un premier mode de réalisation, une pièce d'amenée d'huile 6 est soudée sur ce couvercle 5. Cette pièce d'amenée d'huile 6 présente une goulotte 61 sous la forme de deux pentes inclinées identiques qui convergent vers une tubulure centrale 62 débouchant sur l'autre côté et dont l'extrémité libre est chacune prolongée par un crochet 63.

Comme représenté sur la figure 3, ces crochets 63 permettent le clippage de portions tubulaires 35,45 qui débouchent respectivement des cuvettes 3 et 4.

L'implantation des cuvettes 3 et 4 dans le carter 2 est tel que quelle que soit la situation de fonctionnement de la boite de vitesses, c'est à dire quelle que soit la position de(s) la ligne(s) d'arbre par rapport à l'horizontal ou en d'autres termes quel que soit le dévirage du véhicule qui en est équipé au roulage, celles-ci se situent au-dessus de la ligne d'arbre creux dont l'extrémité débouche dans la lumière 210.

Selon un second mode de réalisation, la pièce d'amenée d'huile 6, telle que précédemment décrite, est distincte du couvercle 5. Dans ce cas, la pièce d'amenée d'huile 6 comporte un élément d'étanchéité destiné à être mis en pression lors du vissage du couvercle 5 sur l'enceinte 1. L'élément d'étanchéité est alors de préférence monté sur l'arrête de la pièce 6 destinée à coopérer avec la face intérieure du couvercle 5 de sorte à permettre avantageusement une réduction des fuites d'huile entre le couvercle 5 et la pièce d'amenée d'huile 6.

Pour assembler l'enceinte 1 selon l'invention avant l'assemblage final de la boite de vitesses, c'est à dire avant le coiffage de l'enceinte sur la mécanique interne de la boite de vitesses, on réalise les opérations suivantes :
- on place chacune des cuvettes 3 et 4 à l'intérieur du carter 2 en s'assurant que les bossages 25 viennent se loger respectivement dans les lumières 32 et 42 afin d'une part de positionner très précisément les cuvettes 3 et 4 et et d'autre part que leurs portions tubulaires 35, 45 débouchent sur la face extérieure du fond 21 du carter;
- on vient réaliser le clippage des portions tubulaires 35,45 des cuvettes 3,4 avec les crochets 63 de la pièce d'amenée d'huile 6;
- on fixe définitivement le couvercle 5 au carter de boite de vitesses 2 par vissage.

Avantageusement, le second mode de réalisation facilite l'opération de montage. En effet, il est plus aisé de réaliser le clipage des portions tubulaires 35,45 des cuvettes 3,4 sur les crochets 63 de la pièce d'amenée d'huile 6 sans la présence du couvercle 5, lequel réduit considérablement la visibilité des pièces à cliper.

L'enceinte 1 qui vient d'être décrite permet une lubrification certaine de l'ensemble de la mécanique interne de la boite de vitesses, quel que soit le fonctionnement de la boite de vitesses, c'est-à-dire les conditions de roulage du véhicule automobile qui en est équipé.

En effet, les projections d'huile générées par l'ensemble des pignons de la boite de vitesses remplissent nécessairement les cuvettes 3 et 4. L'huile ainsi contenue s'écoule à travers les portions tubulaires 35 et 45 puis à travers la goulotte 61 et enfin par la tubulure 62 implantée dans la ligne d'arbre creux qui elle-même percée de canaux de manière connue en soi alimente directement les pignons fixes et/ou fous montés sur la ligne d'arbre.

L'invention qui vient d'être décrite permet d'assurer une lubrification à coup sûr de la mécanique interne d'une boite de vitesses munie de l'enceinte 1 et ce quelles que soient les conditions de fonctionnement de cette boite, c'est-à-dire quelles que soient les conditions de roulage du véhicule qui en est équipé (fonctionnement « normal », en situation de dévirage....)

En outre, l'assemblage de l'enceinte ne nuit pas à celui final de la boite car c'est une opération réalisée par un montage préalable, ce qui est avantageux en termes de temps de fabrication.

Il va de soi que de nombreuses améliorations peuvent être apportées sans pour autant sortir du cadre de l'invention. Par exemple, les cuvettes peuvent être complètement fixées au carter de boite et non clippées en partie à la pièce d'amenée d'huile. Ces cuvettes peuvent prendre différentes formes....

## Revendications

1. Enceinte (1) de boite de vitesses comprenant un carter (2), au moins une ouverture (210) pratiquée dans le fond (21) du carter adaptée pour recevoir l'extrémité d'une ligne d'arbre creux de ladite boite, une première cuvette (3) adaptée pour recevoir et contenir de l'huile contenue à l'intérieur de la boite de vitesses en fonctionnement, et un couvercle (5) fixé au fond du carter à l'extérieur de celui-ci **caractérisée en ce que** la première cuvette est fixée à l'intérieur du carter et est en contact avec le fond du carter, **en ce que** l'enceinte comprend une seconde cuvette (4) également adaptée pour recevoir et contenir de l'huile contenue à l'intérieur de la boite de vitesses en fonctionnement et fixée à l'intérieur du carter en étant en contact avec le fond (21) du carter **et en ce que** lesdites première (3) et seconde (4) cuvettes sont adaptées pour être positionnées au-dessus de la ligne d'arbre creux de la boite de vitesses en fonctionnement et débouchent à l'extérieur du fond (21) du carter (2) sur une pièce d'amenée d'huile (6) comprenant une goulotte (61) débouchant sur une tubulure (62) adaptée pour être logée dans la ligne d'arbre creux.

2. Enceinte selon la revendication 1, **caractérisée en ce que** lesdites première (3) et seconde (4) cuvettes sont adaptées pour être disposées symétriquement par rapport à la ligne d'arbre creux.

3. Enceinte selon la revendication 2, **caractérisée en ce que** la première (3) cuvette présente une paroi (33) inclinée d'un angle α sensiblement de l'ordre de 5° par rapport à la perpendiculaire du fond (34) de ladite cuvette.

4. Enceinte selon l'une quelconque des revendications précédentes, **caractérisée en ce que** la deuxième cuvette (4) présente une paroi (43) inclinée d'un angle α' compris entre 10 et 15° par rapport à la perpendiculaire du fond (44) de ladite cuvette.

5. Enceinte selon l'une quelconque des revendications précédentes, **caractérisée en ce que** la pièce d'amenée d'huile (6) est préalablement fixée au couvercle, de préférence par soudage.

6. Enceinte selon l'une quelconque des revendications 1 à 4, **caractérisée en ce que** la pièce d'amenée d'huile (6) est indépendante du couvercle (5) et comprend, sur l'arête destinée à coopérer avec la face intérieure du couvercle (5), un élément d'étanchéité apte à réduire les fuites d'huile entre le couvercle (5) et la pièce d'amenée d'huile (6).

7. Enceinte selon l'une quelconque des revendications précédentes, **caractérisée en ce que** le carter comprend des bossages (25) adaptés pour se loger dans des lumières (32,42) pratiquées dans chacune des cuvettes.

8. Enceinte selon l'une quelconque des revendications précédentes, **caractérisée en ce que** la fixation des cuvettes est réalisée par clippage directement à la pièce d'amenée d'huile.

9. Enceinte selon l'une quelconque des revendications précédentes, **caractérisée en ce que** le fond (21) du carter présente deux autres ouvertures (211,212) adaptées pour recevoir chacune l'extrémité d'une ligne d'arbre.

10. Enceinte selon l'une quelconque des revendications précédentes, **caractérisée en ce qu'**une paroi latérale (24) du carter présente une ouverture (241) adaptée pour recevoir un actionneur de la boite de vitesses.

11. Boite de vitesses mécanique pilotée comprenant une enceinte selon la revendication 10 et au moins un actionneur.

12. Boite selon la revendication 11, **caractérisée en ce que** la ligne d'arbre creux recevant la tubulure (62) de la pièce d'amenée d'huile est la ligne d'arbre primaire.

## Patentansprüche

1. Gehäuse (1) für ein Getriebe mit einem Kasten (2), mindestens einer Öffnung (210) im Boden (21) des Kastens, die das Ende einer Hohlwellenleitung des Getriebes aufnimmt, mit einem ersten Gefäß (3), welches das im Inneren des Getriebes im Betrieb enthaltene Öl aufnehmen und enthalten kann, und mit einem am Boden des Kastens an dessen Außenseite befestigten Deckel (5), **dadurch gekennzeichnet, dass** das erste Gefäß im Inneren des Kastens befestigt ist und mit dem Boden des Kastens in Kontakt steht, und dass das Gehäuse ein zweites Gefäß (4) aufweist, das ebenfalls das im Inneren des Getriebes im Betrieb enthaltene Öl aufnehmen und enthalten kann und innerhalb des Kastens befestigt ist und dabei in Kontakt mit dem Boden (21) des Kastens steht, und dass das erste Gefäß (3) und das zweite Gefäß (4) im Betrieb des Getriebes oberhalb der Hohlwellenleitung positioniert sind und außerhalb des Bodens (21) des Kastens (2) an einem Ölzufuhrteil (6) münden, das eine Rinne (61) aufweist, die in einen Stutzen (62) mündet, der in der Hohlwellenleitung vorgesehen sein kann.

2. Gehäuse nach Anspruch 1, **dadurch gekennzeichnet, dass** das erste Gefäß (3) und das zweite Gefäß (4) symmetrisch gegenüber der Hohlwellenleitung angeordnet sein können.

3. Gehäuse nach Anspruch 2, **dadurch gekennzeichnet, dass** das erste Gefäß (3) eine Wand (33) aufweist, die um einen Winkel α in der Größenordnung von 5° gegenüber der Senkrechten des Bodens (34) des Gefäßes geneigt ist.

4. Gehäuse nach einem der vorhergehenden Ansprüche, **dadurch gekennzeichnet, dass** das zweite Gefäß (4) eine Wand (43) aufweist, die um einen Winkel α' zwischen 10 und 15° gegenüber der Senkrechten des Bodens (44) des Gefäßes geneigt ist.

5. Gehäuse nach einem der vorhergehenden Ansprüche, **dadurch gekennzeichnet, dass** das Ölzufuhrteil (6) zuvor am Deckel befestigt wird, vorzugsweise durch Schweißen.

6. Gehäuse nach einem der Ansprüche 1 bis 4, **dadurch gekennzeichnet, dass** das Ölzufuhrteil (6) unabhängig vom Deckel (5) ist und an der Kante, die mit der Innenseite des Deckels (5) zusammenwirken soll, ein Dichtungselement aufweist, das die Ölverluste zwischen dem Deckel (5) und dem Ölzufuhrteil (6) verringert.

7. Gehäuse nach einem der vorhergehenden Ansprüche, **dadurch gekennzeichnet, dass** der Kasten Buckel (25) aufweist, die in Öffnungen (32, 42) in den Gefäßen zu liegen kommen können.

8. Gehäuse nach einem der vorhergehenden Ansprüche, **dadurch gekennzeichnet, dass** die Gefäße direkt am Ölzufuhrteil befestigt werden.

9. Gehäuse nach einem der vorhergehenden Ansprüche, **dadurch gekennzeichnet, dass** der Boden (21) des Kastens zwei Öffnungen (211, 212) aufweist, die jeweils das Ende einer Wellenleitung aufnehmen können.

10. Gehäuse nach einem der vorhergehenden Anspräche, **dadurch gekennzeichnet, dass** eine Seitenwand (24) des Kastens eine Öffnung (241) aufweist, die ein Betätigungsorgan des Getriebes aufnehmen kann.

11. Ferngesteuertes mechanisches Getriebe mit einem Gehäuse nach Anspruch 10 und mindestens einem Betätigungsorgan.

12. Getriebe nach Anspruch 11, **dadurch gekennzeichnet, dass** die Hohlwellenleitung, die den Stutzen (62) des Ölzufuhrteils aufnimmt, die Antriebswellenleitung ist.

## Claims

1. Gear box enclosure (1) comprising a housing (2), at least one opening (210) made in the bottom (21) of the housing adapted to receive the end of a hollow line shaft of said box, a first seat (3) adapted to receive and contain oil contained in the inside of the gear box when in operation, and a lid (5) fixed to the bottom of the housing outside the latter, **characterised in that** the first seat is fixed to the inside of the housing and is in contact with the bottom of the housing, **in that** the enclosure comprises a second seat (4) also adapted to receive and contain oil contained in the inside of the gear box when in operation and fixed to the inside of the housing while being in contact with the bottom (21) of the housing **and in that** said first (3) and second (4) seats are adapted to be positioned above the hollow line shaft of the gear box when in operation and emerge outside the bottom (21) of the housing (2) on an oil supply part (6) comprising a spout (61) leading to tubing (62) adapted to be housed in the hollow line shaft.

2. Enclosure according to Claim 1, **characterised in that** said first (3) and second (4) seats are adapted to be arranged symmetrically with respect to the hollow line shaft.

3. Enclosure according to Claim 2, **characterised in that** the first seat (3) has a wall (33) tilted at an angle α substantially of the order of 5° with respect to the perpendicular to the bottom (34) of said seat.

4. Enclosure according to any one of the preceding claims, **characterised in that** the second seat (4) has a wall (43) tilted at an angle α' comprised between 10 and 15° with respect to the perpendicular to the bottom (44) of said seat.

5. Enclosure according to any one of the preceding claims, **characterised in that** the oil supply part (6) is fixed beforehand to the lid, preferably by welding.

6. Enclosure according to any one of Claims 1 to 4, **characterised in that** the oil supply part (6) is independent of the lid (5) and comprises, on the edge intended to co-operate with the inner face of the lid (5), a sealing element capable of reducing oil leaks between the lid (5) and the oil supply part (6).

7. Enclosure according to any one of the preceding claims, **characterised in that** the housing comprises bosses (25) adapted to be housed in holes (32, 42) made in each of the seats.

8. Enclosure according to any one of the preceding claims, **characterised in that** the seats are fixed by clipping directly to the oil supply part.

9. Enclosure according to any one of the preceding claims, **characterised in that** the bottom (21) of the housing has two other openings (211, 212) each adapted to receive the end of a line shaft.

10. Enclosure according to any one of the preceding claims, **characterised in that** a side wall (24) of the housing has an opening (241) adapted to receive an actuator of the gear box.

11. Automatically-controlled mechanical gear box comprising an enclosure according to Claim 10 and at least one actuator.

12. Box according to Claim 11, **characterised in that** the hollow line shaft receiving the pipe (62) of the oil supply part is the primary line shaft.
